# EUROPÄISCHE PATENTSCHRIFT

(11) **EP 3 024 708 B1**
(45) Veröffentlichungstag und Bekanntmachung des Hinweises auf die Patenterteilung: **10.05.2017**
(21) Anmeldenummer: 14742200.0
(22) Anmeldetag: 18.07.2014
(51) Int. Cl.: B60T 11/22, B60T 11/26, B60T 13/14, B60T 17/06

(54) **HAUPTBREMSZYLINDERANORDNUNG EINER KRAFTFAHRZEUGBREMSANLAGE MIT FILTERELEMENT SOWIE FLUIDRESERVOIR UND EINSATZELEMENT HIERFÜR**
MASTER BRAKE CYLINDER ASSEMBLY OF A MOTOR VEHICLE BRAKE SYSTEM HAVING A FILTER ELEMENT, AND FLUID RESERVOIR AND INSERT ELEMENT THEREFOR
ENSEMBLE MAÎTRE-CYLINDRE D'UN SYSTÈME DE FREINAGE DE VÉHICULE AUTOMOBILE POURVU D'UN ÉLÉMENT FILTRE, ET RÉSERVOIR DE FLUIDE ET ÉLÉMENT D'INSERTION POUR CELUI-CI

(30) Priorität: 23.07.2013 DE 102013012237
(43) Veröffentlichungstag der Anmeldung: 01.06.2016
(73) Patentinhaber: Lucas Automotive GmbH, 56070 Koblenz (DE)
(72) Erfinder: NOLL, Daniel, 56626 Andernach (DE); ZEUNER, Lothar, 57518 Steineroth (DE)
(74) Vertreter: Thum, Bernhard
(86) Internationale Anmeldenummer: PCT/EP2014/065493
(87) Internationale Veröffentlichungsnummer: WO 2015/011045

(56) Entgegenhaltungen:
- EP-A1- 2 213 537
- DE-A1- 3 803 565
- DE-A1- 10 002 118
- DE-A1-102007 035 840
- DE-A1-102007 035 842
- FR-A1- 2 344 428
- FR-A1- 2 926 766
- GB-A- 2 216 968
- US-A1- 2005 062 343

## Beschreibung

Die vorliegende Erfindung betrifft eine Hauptbremszylinderanordnung einer Kraftfahrzeugbremsanlage, mit einem Fluidreservoir und einem Hauptbremszylinder, wobei das Fluidreservoir und der Hauptbremszylinder über wenigstens einen Fluidkanal fluidisch miteinander gekoppelt sind.

Derartige Hauptbremszylinderanordnungen sind allgemein aus dem Stand der Technik bekannt. Dabei dient das Fluidreservoir zur Aufnahme einer Bremsflüssigkeit, die über den Fluidkanal in den Hauptbremszylinder geleitet werden kann und von dort aus in weitere Bereiche eines Fluidkreislaufes der Kraftfahrzeugbremsanlage. Das Einspeisen von Bremsflüssigkeit aus dem Fluidreservoir kann dabei temporär erfolgen, um zum Beispiel Verschleißzustände innerhalb der Kraftfahrzeugbremsanlage zu kompensieren. Ebenso können Fluidströme in Abhängigkeit einzelner Betriebszustände auftreten, z.B. in Form eines Rückströmens von Bremsflüssigkeit aus dem Fluidkreislauf in das Fluidreservoir in Folge eines Abbaus eines Bremsdruckes innerhalb der Kraftfahrzeugbremsanlage. Bei modernen Kraftfahrzeugbremsanlagen ist es zudem verbreitet, dass weitere, automatisch betriebene Bremsdruckerzeugungseinrichtungen an den Fluidkreislauf angeschlossen sind. Diese können über den Fluidkanal und den Hauptbremszylinder Bremsflüssigkeit aus dem Fluidreservoir zum Aufbau eines Bremsdruckes entnehmen.

Problematisch bei derartigen Hauptbremszylinderanordnungen ist, dass sich im Fluidreservoir bereits vor der Endmontage vorhandene Schmutzpartikel mit der darin eingefüllten Bremsflüssigkeit vermischen und sich dadurch über den gesamten Fluidkreislauf der Kraftfahrzeugbremsanlage verteilen können. Dabei können weitere mit der Bremsflüssigkeit in Kontakt tretende Komponenten der Kraftfahrzeugbremsanlage in ihrer Funktion beeinträchtigt oder beschädigt werden. Ebenso können die Schmutzpartikel Ablagerungen bilden, welche Strömungsquerschnitte innerhalb des Fluidkreislaufs lokal verengen oder blockieren. Letzteres beeinträchtigt insbesondere die Funktionsweise derartiger Kraftfahrzeugbremsanlagen, die - wie vorstehend beschrieben - dem Fluidreservoir über automatische Bremsdruckerzeugungseinrichtungen Bremsflüssigkeit entnehmen. Die Bremsflüssigkeit muss in diesen Fällen vergleichsweise lange Strecken durch teilweise kleindimensionierte Fluidkanäle innerhalb des Fluidkreislaufs zurücklegen, was durch entsprechende Ablagerungen erheblich erschwert werden kann. Somit kann durch einen Eintrag von Schmutzpartikeln oder Fremdkörpern das Ansprechverhalten der gesamten Kraftfahrzeugbremsanlage nachteilig beeinflusst werden.

Um derartige Probleme zu vermeiden, werden bei einem erstmaligen Befüllen des Fluidreservoirs mit Bremsflüssigkeit oder einem Nachfüllen im Rahmen von Wartungsarbeiten teilweise Siebanordnungen verwendet, die temporär oder dauerhaft in Einfüllöffnungen des Fluidreservoirs angeordnet sind. Diese verhindern einen Eintritt von Schmutzpartikeln aus der Umgebung, die sich ausgehend vom Fluidreservoir im Fluidkreislauf verteilen könnten.

Durch derartige Lösungen kann jedoch nicht verhindert werden, dass bereits bei der Herstellung der Hauptbremszylinderanordnung in das Fluidreservoir eingebrachte Schmutzpartikel oder Fremdkörper sich mit einer darin eingefüllten Bremsflüssigkeit vermischen. Um diesem Risiko zu begegnen, werden bisher aufwendige Prozesse zur Reinigung des Fluidreservoirs vor einer Montage an dem Hauptbremszylinder durchgeführt. Dies erfordert gesonderte Produktionsschritte und -anlagen und erhöht die erforderliche Herstellungszeit sowie die Kosten erheblich. Auch bei einem anschließenden Lagern oder Transportieren von vorgefertigten Fluidreservoiren vor einem Montieren an einem Hauptbremszylinder müssen entsprechende Vorkehrungen getroffen werden, um ein Wiederverschmutzen des Fluidreservoirs zu vermeiden. Mit anderen Worten muss also bisher durch verhältnismäßig aufwendige Zusatzmaßnahmen sichergestellt werden, dass das Fluidreservoir vor einer Montage an dem Hauptbremszylinder vollständig frei von Verschmutzungen ist.

Aus dem Stand der Technik ist weiterhin das Dokument WO 2011/006784 A1 bekannt, welches eine Anordnung zum Vermeiden eines Durchtritts von Luftblasen aus einem Fluidreservoir in einen Hauptbremszylinder einer handbetriebenen Motorradbremse offenbart. Hierzu ist ein großbauender, in den Innenraum des Fluidreservoirs hineinragender Stutzen vorgesehen, der mit Blöcken ausgebildet ist, die Durchtrittsöffnungen aufweisen. Diese sind gemäß einer erwarteten Größe der Luftblasen dimensioniert. Auch in diesem Fall kann ein Weitertransport von in dem Fluidreservoir vorhandenen oder nachträglich eingebrachten Schmutzpartikeln nicht vermieden werden und das Fluidreservoir müsste vor einer Montage aufwendig gereinigt werden.

Das Dokument DE 10 2007 037 225 A1 offenbart ferner ein Fluidreservoir mit einem Füllfilter, der im Bereich eines Einfüllstützens des Fluidreservoirs angeordnet ist. Wie vorstehend diskutiert, kann mit einer solchen Anordnung lediglich das Einbringen von Schmutzpartikel während eines Befüllvorganges verhindert werden, wohingegen bereits im Fluidreservoir vorhanden Verschmutzungen nicht aufgefangen werden können.

Aus dem Dokument US 7 261 123 B2 ist ein Reservoirbehälter für ein Servosteuersystem eines Kraftfahrzeuges bekannt, bei dem ein Filterelement zwischen einem oberen und unterem Gehäusebereiche angeordnet ist. Das Filterelement ist Bestandteil einer Lösung zum Vermeiden von Luftblasenbildungen in dem Reservoirbehälter.

Das Dokument US 7 261 382 B2 offenbart eine Lösung zum Vermeiden eines Herausspritzens von Bremsflüssigkeit aus der Einlassöffnung eines Reservoirbehälters, beispielsweise bei einem Entlüften des Fluidkreislaufes durch wiederholtes Betätigen des Bremspedals. Dabei kann auch ein Filterelement innerhalb des Reservoirbehälters vorgesehen sein, das von der Bremsflüssigkeit bei einem Strömen zwischen verschiedenen Fluidkammern innerhalb des Reservoirbehälters passiert wird. Bei einem Störmen aus den Fluidkammern in den Hauptbremszylinder findet allerdings keine Filterung statt, so dass sich insbesondere produktionsbedingte Verschmutzungen weitestgehend ungehindert im Fluidkreislauf verteilen können.

Aus dem Dokument US 4 062 774 A ist eine Filtervorrichtung in Form einer separaten Baugruppe bekannt, die über Schläuche mit einem Fluidreservoir und einem Hauptbremszylinder verbunden werden kann.

Das Dokument DE 38 08 522 A1 offenbart einen Tandemhauptzylinder für eine schlupfgeregelte hydraulische Bremsanlage, in dessen Gehäuse in einer Längsbohrung ein durch eine erste Rückstellfeder vorgespannter Primär- sowie ein durch eine zweite Rückstellfeder vorgespannter Sekundärkolben einen Primär- und einen Sekundärdruckraum begrenzen, die über Nachlaufräume sowie Rückschlagventile mit einem Druckmittelvorratsbehälter verbunden sind und denen ein erstes und ein zweites Regelventil zugeordnet sind, die in Abhängigkeit von einer Betätigungskraft eine zweite Verbindung zwischen den Druckräumen und dem Druckmittelvorratsbehälter freigeben bzw. absperren.

Es ist daher Aufgabe der vorliegenden Erfindung, eine Hauptbremszylinderanordnung bereitzustellen, die unter geringem Aufwand und zu geringen Kosten hergestellt werden kann.

Diese Aufgabe wird durch eine Hauptbremszylinderanordnung der eingangs bezeichneten Art gelöst, bei der vorgesehen ist, dass wenigstens ein Filterelement derart innerhalb der Hauptbremszylinderanordnung angeordnet ist, dass es von einem im Betrieb zwischen Hauptbremszylinder und Fluidreservoir ausgetauschten Bremsflüssigkeitsvolumen durchströmt wird, wobei das Filterelement dazu ausgebildet ist, in der Bremsflüssigkeit vorhandene Schmutzpartikel aufzufangen.

In Abweichung von den bisher getroffenen Maßnahmen ist es also erfindungsgemäß nicht mehr notwendig, das Fluidreservoir vor einem Montieren an dem Hauptbremszylinder vollständig von etwaigen Schmutzpartikeln zu reinigen. Vielmehr werden derartige Schmutzpartikel erst bei bzw. nach Inbetriebnahme der Kraftfahrzeugbremsanlage von dem erfindungsgemäßen Filterelement aufgefangen, sodass diese nicht in den Fluidkreislauf der Kraftfahrzeugbremsanlage eindringen und sich darin verteilen können. Durch Vorsehen des Filterelements kann also in Kauf genommen und auch kompensiert werden, dass in dem Fluidreservoir bis zu gewissen Größenordnungen Schmutzpartikel vorhanden sind oder bei einem Nachfüllen von Bremsflüssigkeit darin eingebracht werden. Dies mindert den bisher betriebenen Aufwand insbesondere bei der Herstellung der erfindungsgemäßen Hauptbremszylinderanordnungen, da ein vollständig verschmutzungsfreier Zustand der zu montierenden Fluidreservoire nicht mehr erforderlich ist.

Dabei ist das Filterelement erfindungsgemäß wahlweise in dem Fluidreservoir, dem Hauptbremszylinder oder in weiteren Elementen innerhalb der Hauptbremszylinderanordnung angeordnet, die von der Bremsflüssigkeit durchströmte Querschnittsbereiche definieren. Beispielsweise können Dichtungselemente, die zwischen Fluidreservoir und Hauptbremszylinder zum Erreichen einer fluidisch dichtenden Verbindung angeordnet sind, mit einem entsprechenden Filterelement ausgebildet sein.

Bei einer Weiterbildung der Erfindung ist vorgesehen, dass das Filterelement im Wesentlichen planar ausgebildet ist. Unter einem planaren Ausbilden ist hierbei im Wesentlichen gemeint, dass der von der Bremsflüssigkeit durchströmte Querschnitt des Filterelements in seinen Abmessungen größer dimensioniert ist als eine Dicke des Filterelements bzw. als der von der Bremsflüssigkeit beim Durchströmen des Filterelements zurückgelegte Weg. Dadurch kann der Strömungswiderstand des Filterelements reduziert werden und ein schnelles Ansprechverhalten der Kraftfahrzeugbremsanlage ist gewährleistet.

Ferner ist erfindungsgemäß vorgesehen, dass das Filterelement in oder an einer Komponente von Fluidreservoir und Hauptbremszylinder angeordnet ist. Mit anderen Worten ist ein wahlweises Anordnen des Filterelements in bzw. an dem Fluidreservoir oder dem Hauptbremszylinder vorgesehen. Dabei kann allgemein vorgesehen sein, dass das Filterelement sozusagen in einem Innenraum der entsprechenden Komponente angeordnet ist oder aber an deren Außenseite, insbesondere an einer Stirnflächen von Anschlussbereichen, die dem Herstellen einer fluidischen Verbindung zu der jeweiligen anderen Komponente dienen. Ein Anordnen in oder an dem Fluidreservoir ermöglicht, dass etwaige Schmutzpartikel unmittelbar im Bereich des Fluidreservoirs aufgefangen werden können und nicht in weitere Bereiche der Hauptbremszylinderanordnung transportiert werden. Weiterhin sind die von der Bremsflüssigkeit durchströmten Querschnittsbereiche des Fluidreservoirs im Vergleich zu den übrigen Bereichen eines Fluidkreislaufs einer Kraftfahrzeugbremsanlage typischerweise verhältnismäßig groß dimensioniert. Somit beeinträchtigen etwaige vom Filterelement aufgefangene und sich daran ablagernde Schmutzpartikel die Flüssigkeitsströmung innerhalb des Fluidkreislauf nur geringfügig, was ein gleichbleibendes Ansprechverhalten gewährleistet. Für ein Anordnen in oder an dem Hautbremszylinder bieten sich insbesondere die Anschlussbereiche zum Fluidreservoir an, da diese von außen üblicherweise leicht zugänglich sind.

Die Erfindung sieht ferner vor, dass die jeweilige Komponente von Fluidreservoir und Hauptbremszylinder einen Anschlussstutzen aufweist, mit der sie an die jeweils andere Komponente von Fluidreservoir und Hauptbremszylinder gekoppelt ist, wobei das Filterelement in oder an dem Anschlussstutzen angeordnet ist. Der Anschlussstutzen ist gegenüber den übrigen Bereichen von Fluidreservoir und Hauptbremszylinders vorteilhafterweise mit einem kleineren Querschnitt ausgebildet. Entsprechend kann das Filterelement ebenfalls weniger groß dimensioniert sein und dabei trotzdem vom gesamten ausgetauschten Fluidvolumen durchströmt werden. Dies führt zu entsprechenden Gewichts- und Kostenreduzierungen. Bei einem Anordnen im Fluidresevoir ist es besonders vorteilhaft, wenn das Filterelement an einem äußeren Endabschnitt des Anschlussstutzens angeordnet ist bzw. mit diesem fluchtet. In diesem Fall ist das Filterelement in dem von einem ausströmenden Bremsflüssigkeitsvolumen zuletzt durchströmten Querschnittsbereich des Fluidreservoirs angeordnet. Sämtliche Bereiche des Fluidreservoirs, die Verschmutzungen aufweisen und diese in die Bremsflüssigkeit übertragen könnten, sind also stromaufwärts vom Filterelement angeordnet. Dies mindert das Risiko eines Eintrags von Schmutzpartikeln ausgehend vom Fluidreservoir erheblich.

In diesem Zusammenhang kann erfindungsgemäß weiterhin vorgesehen sein, dass der Anschlussstutzen als ein von der jeweiligen Komponente von Fluidreservoir und Hauptbremszylinder herauskragender Vorsprung ausgebildet ist. Dadurch ist eine einfache Zugänglichkeit für ein Anordnen des Filterelements im Anschlussstutzen gewährleistet, wodurch die Herstellung der Hauptbremszylinderanordnung erleichtert wird. Vorteilhafterweise kann dabei erfindungsgemäß auch vorgesehen sein, dass der Anschlussstutzen mit einem kreisförmigen Querschnitt ausgebildet ist. Dies gewährleistet, dass das Filterelement relativ zum Anschlussstutzen nahezu beliebig orientierbar ist, wodurch sich der Aufwand während der Herstellung entsprechend verringert. Weiterhin kann durch einen kreisförmigen Querschnitt auch ein gleichmäßiges Strömungsprofil der Bremsflüssigkeit durch das Filterelement erreicht werden.

Bei einer Weiterbildung der Erfindung ist vorgesehen, dass das Filterelement einstückig mit der jeweiligen Komponente von Fluidreservoir und Hauptbremszylinder ausgebildet ist. Dies kann beispielsweise durch ein Anschweißen, Ankleben oder durch ein Einformen des Filterelements insbesondere im Rahmen eines Kunststoffgießprozesses erreicht werden. Dadurch verringert sich der Produktionsaufwand, da keine zusätzlichen nachfolgenden Montageschritte zum Anordnen des Filterelements in oder an der entsprechenden Komponente von Fluidreservoir und Hauptbremszylinder erforderlich sind. Weiterhin ist bei dieser Ausführungsform gewährleistet, dass das Filterelement stets verliersicher mit der entsprechenden Komponente verbunden ist. Erfindungsgemäß kann ferner vorgesehen sein, dass das Filterelement in einem separat von der jeweiligen Komponente von Fluidreservoir und Hauptbremszylinder gebildeten und in dieser Komponente aufgenommen Einsatzelement angeordnet ist. Ein derartiges Einsatzelement kann insbesondere als eine Kartusche oder Hülse mit einem zylindrischen Grundkörper ausgebildet sein, wobei das Filterelement in einer von der Bremsflüssigkeit durchströmten Querschnittsebene des Einsatzelementes angeordnet ist. Auch in diesem Fall ist ein einstückiges Ausbilden von Einsatzelement und Filterelement denkbar. Ebenso kann das Filterelement separat ausgebildet sein und bspw. mittels eines Reib- oder Formschlusses in dem Einsatzelement festgelegt sein. Derartige Einsatzelemente stellen vergleichsweise kleine und somit einfach herzustellende und handzuhabende Bauteile dar. Diese können auch variantenabhängig oder im Rahmen einer Nachrüstung in der entsprechenden Komponente von Fluidreservoir und Hauptbremszylinderangeordnet werden, ohne dass diese zur Aufnahme eines Filterelements speziell angepasst werden müssten. Das Einsatzelement kann allgemein aus einem metallischen Werkstoff oder einem Kunststoff hergestellt sein und beliebig mit einem metallischen oder aus Kunststoff hergestellten Filterelement kombiniert werden.
In diesem Zusammenhang kann ferner vorgesehen sein, dass das Einsatzelement mittels eines Reibschlusses in der jeweiligen Komponente von Fluidreservoir und Hauptbremszylinder festgelegt ist. Durch Herstellen eines Reibschlusses kann auf einfache Weise und ohne das zwangsläufige Verwenden von Zusatzwerkzeugen eine Festlegung des Einsatzelementes erreicht werden. Zusätzlich oder alternativ kann dabei erfindungsgemäß ferner vorgesehen sein, dass das Einsatzelement mittels einer Rastverbindung in der jeweiligen Komponente von Fluidreservoir und Hauptbremszylinder festgelegt ist. Dies kann beispielsweise dadurch erreicht werden, dass die entsprechende Komponente oder das Einsatzelement wenigstens einen Rastvorsprung aufweisen, der im Eingriff mit einer korrespondieren Hinterschneidung steht, die in der jeweiligen anderen aus der entsprechenden Komponente und dem Einsatzelement ausgebildet ist. Das Herstellen eines entsprechenden Formschlusses durch den Eingriff zwischen Rastvorsprung und Hinterschneidung stellt einen besonders zuverlässigen Sicherungsmechanismus des Einsatzelements in oder an der entsprechenden Komponente bereit, wodurch ein Verrutschen oder Herausfallen vermieden werden kann.

In diesem Zusammenhang kann ferner vorgesehen sein, dass das Einsatzelement zumindest abschnittsweise innerhalb des Anschlussstutzens angeordnet ist. Der Anschlussstutzen stellt einen besonders einfach zugänglichen Bereich des Fluidreservoirs und Hauptbremszylinders dar, der im Vergleich zu den übrigen Querschnittsbereichen des Fluidreservoirs und Hauptbremszylinders verhältnismäßig klein dimensioniert ist. Dadurch wird der Montageaufwand und Herstellungsaufwand des Einsatzelements verringert. Zum Erreichen einer sicheren Anordnung des Einsatzelements im Anschlussstutzen kann dabei vorteilhaft weiterhin vorgesehen sein, dass das Einsatzelement zumindest einen Festlegungsabschnitt aufweist, dessen Querschnittsabmessungen die inneren Querschnittsabmessungen des Anschlussstutzens zumindest bereichsweise überschreiten. Hierdurch kann auf besonders einfache Weise einer der vorstehend beschriebenen Befestigungsmechanismen in Form eines Reibschlusses oder Formschlusses erreicht werden. Mit anderen Worten ist das Einsatzelement bei dieser Variante also mit einer Übermaßpassung zum Anschlussstutzen ausgebildet. In diesem Zusammenhang kann erfindungsgemäß ferner vorgesehen sein, dass der Festlegungsabschnitt mit einem Vorsprung ausgebildet ist, der eine Außenmantelfläche des Einsatzelementes umläuft. Hierdurch lässt sich eine entsprechende Übermaßpassung auf besonders einfache Weise definiert einstellen.

Bei einer Weiterbildung der Erfindung ist vorgesehen, dass das Einsatzelement einen Anschlagsabschnitt aufweist, der mit der jeweiligen Komponente von Fluidreservoir und Hauptbremszylinder in Anlage steht und eine Einschubtiefe des Einsatzelements in der jeweiligen Komponente von Fluidreservoir und Hauptbremszylinder begrenzt. Der Anschlagsabschnitt kann zum Beispiel in Form eines kragenförmigen Endabschnittes eines zylindrischen, hülsenförmigen Einsatzelementes ausgebildet sein. Der kragenförmige Endabschnitte überschreitet dabei den Durchmesser von sowohl den übrigen Abschnitten des Einsatzelements wie auch von einer Aufnahmeöffnung für das Einsatzelement in der entsprechenden Komponente von Fluidreservoir oder Hauptbremszylinder. Das Einsatzelement kann demzufolge mit seinem dem kragenförmigen Endabschnitt gegenüberliegenden Ende in die Aufnahmeöffnung eingesetzt und soweit darin eingeschoben werden, bis der kragenförmigen Endabschnitt in Anlage mit dem Bereich der Aufnahmeöffnung gelangt. Dadurch ist sichergestellt, dass das Einsatzelement stets gleichartig in der jeweiligen Komponente von Fluidreservoir und Hauptbremszylinder positioniert ist und Fehlerpotenziale insbesondere bei einer manuellen Montage des Einsatzelementes werden reduziert.

Die Erfindung betrifft ferner ein separates Einsatzelement für eine Hauptbremszylinderanordnung der vorstehend beschriebenen Art, wobei sämtliche der vorstehenden Merkmale hinsichtlich des Einsatzelementes einzeln oder in beliebiger Kombination untereinander vorgesehen sein können.

Weiterhin betrifft die Erfindung ein Fluidreservoir für eine Hauptbremszylinderanordnung der vorstehend beschriebenen Art. Auch hierbei können sämtliche der vorstehenden Merkmale in Bezug auf das Fluidreservoir einzeln oder in Kombination untereinander vorgesehen sein.

Die Erfindung wird im Folgenden beispielhaft anhand der beiliegenden Figuren beschrieben. Es stellen dar:
- Figur 1: eine Darstellung des grundlegenden Aufbaus einer erfindungsgemäßen Hauptbremszylinderanordnung, wobei der Übergangsbereich von Fluidreservoir und Hauptbremszylinder in Teilschnittansicht gezeigt ist;
- Figur 2: eine perspektivische Teilschnittansicht eines Fluidreservoirs mit darin angeordnetem Filterelement gemäß einer ersten Ausführungsform der Erfindung, wobei sämtliche Elemente in einer Schnittdarstellung gezeigt sind;
- Figur 3: eine weitere Darstellung der Ansicht aus Figur 2;
- Figur 4: eine Teilschnittansicht einer Hauptbremszylinderanordnung gemäß einer zweiten Ausführungsform der Erfindung;
- Figur 4a: eine Detailansicht eines in Figur 4 gezeigten Einsatzelements in Einzelteildarstellung;
- Figur 5: eine perspektivische Teilschnittansicht eines Fluidreservoirs mit darin angeordnetem Filterelement gemäß einer dritten Ausführungsform der Erfindung, wobei sämtliche Elemente in einer Schnittdarstellung gezeigt sind; und
- Figur 6: eine Teilschnittansicht eines Fluidreservoirs mit darin angeordnetem Filterelement gemäß einer vierten Ausführungsform der Erfindung, wobei sämtliche Elemente in einer Schnittdarstellung gezeigt sind.

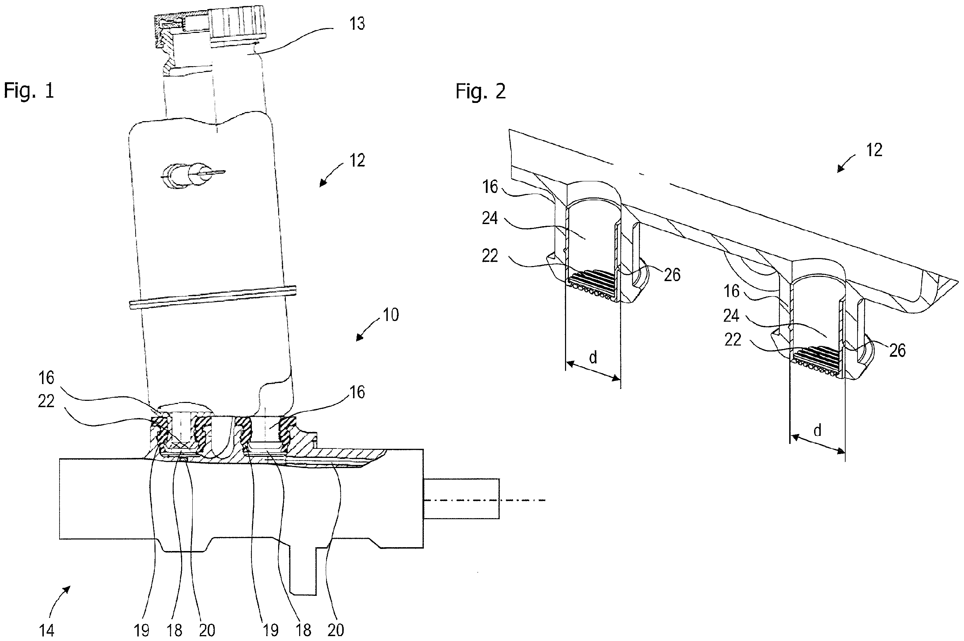

In Figur 1 ist eine Hauptbremszylinderanordnung gemäß der vorliegenden Erfindung gezeigt und allgemein mit 10 bezeichnet. Die Hauptbremszylinderanordnung 10 weist ein Fluidreservoir 12 auf, das an einen Hauptbremszylinder 14 gekoppelt ist. Der Übergangsbereich zwischen Fluidreservoir 12 und Hauptbremszylinder 14 ist dabei in Teilschnittansicht gezeigt. Man erkennt, dass das Fluidreservoir 12 an seinem in Figur 1 oberen Ende eine Einfüllöffnung 13 aufweist und an seinem in Figur 1 unteren Ende zwei Austrittsöffnungen in Form von Anschlussstutzen 16. Die Anschlussstutzen 16 sind jeweils als vom Fluidreservoir 12 herauskragende Vorsprünge ausgebildet und in Aufnahmeöffnungen 18 des Hauptbremszylinders 14 aufgenommen. Zwischen den Anschlussstutzen 16 und den Aufnahmeöffnungen 18 ist jeweils ein Dichtelement 19 angeordnet.

Weiterhin erkennt man in Figur 1 schematisch angedeutete Nachlaufbohrungen 20, die sich ausgehend von den Aufnahmebohrungen 18 in Richtung von in Figur 1 nicht gezeigten Druckkammern innerhalb des Hauptbremszylinders erstrecken. Die Anschlussstutzen 16, die Aufnahmebohrungen 18 und die Nachlaufbohrungen 20 definieren somit im Wesentlichen einen den Hauptbremszylinder bzw. dessen Druckkammern und das Fluidreservoir fluidisch koppelnde Fluidkanal. Der Hauptbremszylinder 14 ist weiterhin in an sich bekannter Weise an weitere Bereiche und Systeme des Fluidkreislaufs einer Kraftfahrzeugbremsanlange anschließbar (nicht gezeigt).

In Figur 1 ist in dem in Teilschnittansicht gezeigten Anschlussstutzen 16 ein Filterelement 22 angedeutet, wobei der nicht geschnitten dargestellte Anschlussstutzen 16 ebenso ein solches Filterelement 22 aufweist. Die Filterelemente 22 werden von einem zwischen Fluidreservoir und Hauptbremszylinder ausgetauschtem Bremsflüssigkeitsvolumen durchströmt und sind dazu ausgebildet, in der Bremsflüssigkeit vorhandene Schmutzpartikel aufzufangen bzw. herauszufiltern. Wie eingangs beschrieben, betrifft dies insbesondere Schmutzpartikel innerhalb des Fluidreservoirs, die von einem aus dem Fluidreservoir ausströmenden Bremsflüssigkeitsvolumen in nachfolgende Bereiche des Fluidkreislaufes einer Kraftfahrzeugbremsanlage transportiert werden könnten.

Im Folgenden werden erfindungsgemäße Möglichkeiten zum Anordnen derartiger Filterelemente 22 innerhalb der Hauptbremszylinderanordnung 10 anhand konkreter Ausführungsformen der Erfindung beschrieben. Dabei wird auf den im Zusammenhang mit Figur 1 beschriebenen Grundaufbau Bezug genommen. Gleichartige oder gleichwirkende Komponenten werden entsprechend mit gleichen Bezugszeichen versehen.

In Figur 2 ist eine Teilansicht eines Fluidreservoirs 12 gezeigt und in einer Schnittansicht dargestellt, wobei das Fluidreservoir 12 analog zum in Figur 1 gezeigten Beispiel ausgebildet ist. Man erkennt, dass das Fluidreservoir 12 wiederum zwei Anschlussstutzen 16 aufweist, die mit einem kreisförmigen Innenquerschnitt ausgebildet sind, der einen Durchmesser d aufweist. Gemäß der in dieser Figur gezeigten ersten Ausführungsform der Erfindung, ist in den Anschlussstutzen 16 jeweils ein Einsatzelement 24 angeordnet, in dem ein relativ engmaschiges Filterelement 22 aufgenommen ist. Die Einsatzelemente 24 sind als zylindrische bzw. rohrförmige Hohlkörper ausgebildet und weisen einen Festlegungsabschnitt 26 auf, der als ein die Einsatzelemente 24 an deren Außenmantelfläche umlaufender wulstartiger Vorsprung ausgebildet ist. Der Festlegungsabschnitt 26 definiert einen Durchmesser der Einsatzelemente 24, der in einem nicht montierten Zustand der Einsatzelemente 24 den inneren Durchmesser d der Anschlussstutzen 16 geringfügig überschreitet. Mit anderen Worten sind die Einsatzelemente 24 im Bereich des Festlegungsabschnittes 26 mit einer Übermaßpassung zum inneren Querschnitt der Anschlussstutzen 16 ausgebildet. Im gezeigten Beispiel sind sowohl die Einsatzelemente 24 als auch das Fluidreservoir 12 aus Kunststoff hergestellt. Zum Überwinden der Übermaßpassung sind die Einsatzelemente 24 unter einer geringfügigen elastischen Deformation in den Anschlussstutzen 16 angeordnet. Dadurch wird eine Klemmkraft bzw. ein Reibschluss zwischen den Elementen erzeugt, der die Einsatzelemente 24 in dem jeweiligen Anschlussstutzen 16 festlegt.

Im gezeigten Ausführungsbeispiel ist das Filterelement 22 schematisch als planar ausgebildeter engmaschiger Gitterkörper dargestellt. Im Prinzip eignen sich jegliche Strukturen, die ein Heraustrennen bzw. Auffangen von Schmutzpartikeln aus einem das Filterelement 22 durchströmenden Bremsflüssigkeitsvolumen ermöglichen. Die genaue Maschen- oder Porengröße des Filterelements 22 ist dabei an eine erwartete Größe und/oder Menge der Schmutzpartikel angepasst.

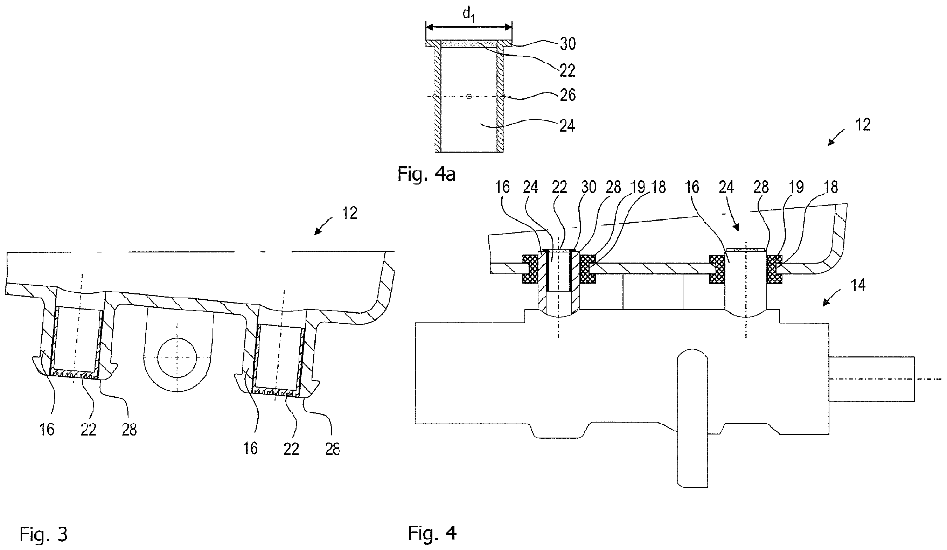

Figur 3 zeigt eine weitere Ansicht der Darstellung aus Figur 1. Man erkennt, dass die Filterelemente 22 und die äußersten Endabschnitte der Anschlussstutzen 16 in Form der Stirnflächen 28 miteinander fluchten. Somit ist das Filterelement im äußersten Querschnittsbereich des Fluidreservoirs 12 angeordnet, der von einem ausströmenden Bremsflüssigkeitsvolumen durchströmt wird. Sämtliche Bereiche des Fluidreservoirs 12, die Verschmutzungen aufweisen und diese in die Bremsflüssigkeit übertragen könnten, sind im betrachteten Fall somit stromaufwärts vom Filterelement 22 angeordnet.

In Figur 4 ist eine weitere Ausführungsform der Erfindung gezeigt, bei der die Filterelemente 22 im Hauptbremszylinder 14 aufgenommen sind. Im Gegensatz zu dem dem vorstehend beschriebenen Ausführungsbeispiel, ist der Hauptbremszylinder 14 in diesem Fall mit zwei Anschlussstutzen 16 ausgebildet und das Fluidreservoir 12 weist korrespondierende Aufnahmeöffnungen 18 auf. Dabei sind wiederum Dichtungselemente 19 in den Aufnahmeöffnungen 18 angeordnet, um die Verbindung der Anschlussstutzen 16 und der Aufnahmeöffnungen 18 fluidisch abzudichten. Analog zur vorigen Ausführungsform sind wiederum Einsatzelemente 24 in den Anschlussstutzen 16 angeordnet, welche jeweils ein Filterelement 22 aufnehmen. In der Detailansicht 4a erkennt man, dass die Einsatzelemente 22 erneut einen Festlegungsabschnitt 26 in Form eines umlaufenden Vorsprunges aufweisen, um einen Reibschluss zum Anschlussstutzen 16 herzustellen. Die Einsatzelemente 22 unterscheiden sich im gezeigten Fall von der vorstehend beschriebenen Variante allerdings dadurch, dass sie einen kragenförmig ausgebildeten Anschlagsabschnitt 30 an einem ihrer Enden aufweisen. Dieser ist mit einem Durchmesser d₁ ausgebildet, der größer als der Innendurchmesser der Anschlussstutzen 16 ist, sodass der Anschlagsabschnitt 30 in Anlage mit den Anschlussstutzen 16 bzw. deren äußeren Stirnflächen 28 steht. Daher können die Einsatzelemente 22 maximal bis zu dem Anschlagsabschnitt 30 in die Anschlussstutzen 16 eingeschoben werden.

Es versteht sich, dass das im Zusammenhang mit der ersten Ausführungsform beschriebene Einsatzelemente 22 ebenso in eine Hauptbremszylinderanordnung gemäß dem zweiten Ausführungsbeispiel eingesetzt werden kann und umgekehrt. Mit anderen Worten sind die Einsatzelemente gemäß den vorstehend beschriebenen Beispielen jeweils wahlweise in etwaige Anschlussstutzen eines Fluidreservoirs oder Hauptbremszylinders einsetzbar.

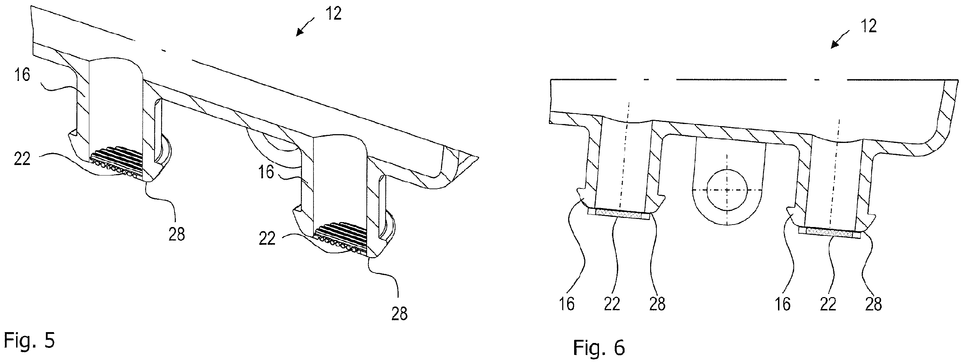

In Figur 5 ist eine zu Figur 2 analoge Schnittansicht eines Teilbereiches eines Fluidreservoirs 12 gezeigt, allerdings für eine dritte Ausführungsform der Erfindung. In dieser Ausführungsform sind die Filterelemente 22 einstückig mit dem Fluidreservoir 12 ausgebildet. Man erkennt weiterhin, dass die Filterelemente 22 erneut innerhalb der Anschlussstutzen 16 angeordnet sind und wiederum mit deren äußersten Endabschnitten fluchten. Im gezeigten Fall sind die Filterelemente 22 in einen das Fluidreservoir 12 bildenden Kunststoffkörper eingegossen.

Alternativ hierzu zeigt Figur 6 eine vierte Ausführungsform, in der eine weitere Variante für ein einstückiges Ausbilden von Fluidreservoir 12 und Filterelement 22 dargestellt ist. In diesem Fall sind die Filterelemente 22 an den äußeren Stirnflächen 28 der Anschlussstutzen 16 stoffschlüssig angefügt. Auch in diesem Fall fluchten die Filterelemente 22 mit einem äußeren Querschnittsbereich der Anschlussstutzen 16 bzw. schließen unmittelbar daran an. Somit können sämtliche vom Fluidreservoir ausgehende Verschmutzungen auffangen werden.

## Patentansprüche

1. Hauptbremszylinderanordnung (10) einer Kraftfahrzeugbremsanlage,
mit einem Fluidreservoir (12) und einem Hauptbremszylinder (14),
wobei das Fluidreservoir (12) und der Hauptbremszylinder (14) über wenigstens einen Fluidkanal fluidisch miteinander gekoppelt sind,
**dadurch gekennzeichnet, dass** wenigstens ein Filterelement (22) derart innerhalb der Hauptbremszylinderanordnung (10) angeordnet ist, dass es von einem im Betrieb zwischen Hauptbremszylinder (14) und Fluidreservoir (12) ausgetauschten Bremsflüssigkeitsvolumen durchströmt wird, wobei das Filterelement (22) dazu ausgebildet ist, in der Bremsflüssigkeit vorhandene Schmutzpartikel aufzufangen,
wobei das Filterelement (22) in oder an einer Komponente von Fluidreservoir (12) und Hauptbremszylinder (14) angeordnet ist und
die jeweilige Komponente von Fluidreservoir (12) und Hauptbremszylinder (14) einen Anschlussstutzen (16) aufweist, mit der sie an die jeweils andere Komponente von Fluidreservoir (12) und Hauptbremszylinder (14) gekoppelt ist, wobei das Filterelement (22) in oder an einer äußeren Stirnfläche (28) von dem Anschlussstutzen (16) angeordnet ist.

2. Hauptbremszylinderanordnung (10) nach Anspruch 1,
**dadurch gekennzeichnet, dass** das Filterelement (22) im Wesentlichen planar ausgebildet ist.

3. Hauptbremszylinderanordnung (10) nach Anspruch 1 oder 2,
**dadurch gekennzeichnet, dass** der Anschlussstutzen (16) als ein von der jeweiligen Komponente von Fluidreservoir (12) und Hauptbremszylinder (14) herauskragender Vorsprung ausgebildet ist.

4. Hauptbremszylinderanordnung (10) nach einem der vorangehenden Ansprüche,
**dadurch gekennzeichnet, dass** der Anschlussstutzen (16) mit einem kreisförmigen Querschnitt ausgebildet ist.

5. Hauptbremszylinderanordnung (10) nach einem der vorangehenden Ansprüche,
**dadurch gekennzeichnet, dass** das Filterelement (22) einstückig mit der jeweiligen Komponente von Fluidreservoir (12) und Hauptbremszylinder (14) ausgebildet ist.

6. Hauptbremszylinderanordnung (10) nach einem der vorangehenden Ansprüche,
**dadurch gekennzeichnet, dass** das Filterelement (22) in einem separat von der jeweiligen Komponente von Fluidreservoir (12) und Hauptbremszylinder (14) gebildeten und in dieser Komponente aufgenommen Einsatzelement (24) angeordnet ist.

7. Hauptbremszylinderanordnung (10) nach Anspruch 6,
**dadurch gekennzeichnet, dass** das Einsatzelement (24) mittels eines Reibschlusses in der jeweiligen Komponente von Fluidreservoir (12) und Hauptbremszylinder (14) festgelegt ist.

8. Hauptbremszylinderanordnung (10) nach Anspruch 6 oder 7,
**dadurch gekennzeichnet, dass** das Einsatzelement (24) mittels einer Rastverbindung in der jeweiligen Komponente von Fluidreservoir (12) und Hauptbremszylinder (14) festgelegt ist.

9. Hauptbremszylinderanordnung (10) nach einem der Ansprüche 6 bis 8,
**dadurch gekennzeichnet, dass** das Einsatzelement (24) zumindest abschnittsweise innerhalb des Anschlussstutzens (16) angeordnet ist.

10. Hauptbremszylinderanordnung (10) nach Anspruch 9,
**dadurch gekennzeichnet, dass** das Einsatzelement (24) zumindest einen Festlegungsabschnitt (26) aufweist, dessen Querschnittsabmessungen die inneren Querschnittsabmessungen des Anschlussstutzens zumindest bereichsweise überschreiten.

11. Hauptbremszylinderanordnung (10) nach Anspruch 10,
**dadurch gekennzeichnet, dass** der Festlegungsabschnitt (26) mit einem Vorsprung ausgebildet ist, der eine Außenmantelfläche des Einsatzelementes (24) umläuft.

12. Hauptbremszylinderanordnung (10) nach einem der Ansprüche 6 bis 10,
**dadurch gekennzeichnet, dass** das Einsatzelement (24) einen Anschlagsabschnitt aufweist, der mit der jeweiligen Komponente von Fluidreservoir (12) und Hauptbremszylinder (14) in Anlage steht und eine Einschubtiefe des Einsatzelements (24) in der jeweiligen Komponente von Fluidreservoir (12) und Hauptbremszylinder (14) begrenzt.

13. Einsatzelement (24) für eine Hauptbremszylinderanordnung (10) nach einem der Ansprüche 6 bis 12.

14. Fluidreservoir (12) für eine Hauptbremszylinderanordnung (10) nach einem der vorangehenden Ansprüche.

## Claims

1. Master brake cylinder assembly (10) of a motor vehicle brake system, comprising a fluid reservoir (12) and a master brake cylinder (14),
wherein the fluid reservoir (12) and the master brake cylinder (14) are fluidically coupled to each other by means of at least one fluid channel,
**characterized in that** at least one filter element (22) is arranged within the master brake cylinder assembly (10) in such a way that a brake fluid volume is exchanged between master brake cylinder (14) and fluid reservoir (12) during operation flows through the filter element, wherein the filter element (22) is designed to collect dirt particles present in the brake fluid,
wherein the filter element (22) is arranged in or on a component of fluid reservoir (12) and master brake cylinder (14) and
the respective component of fluid reservoir (12) and master brake cylinder (14) comprises a connecting piece (16), by which it is coupled to the respective other component of fluid reservoir (12) and master brake cylinder (14), wherein the filter element (22) is arranged in or on an outer end face (28) of the connecting piece (16).

2. Master brake cylinder assembly (10) according to claim 1,
**characterized in that** the filter element (22) is of a substantially planar design.

3. Master brake cylinder assembly (10) according to claim 1 or 2,
**characterized in that** the connecting piece (16) takes the form of a projection that protrudes from the respective component of fluid reservoir (12) and master brake cylinder (14).

4. Master brake cylinder assembly (10) according to one of the preceding claims, **characterized in that** the connecting piece (16) is designed with a circular cross-section.

5. Master brake cylinder assembly (10) one of the preceding claims,
**characterized in that** the filter element (22) is formed integrally with the respective component of fluid reservoir (12) and master brake cylinder (14).

6. Master brake cylinder assembly (10) according to one of the preceding claims, **characterized in that** the filter element (22) is disposed in an insert element (24), which is formed separately from the respective component of fluid reservoir (12) and master brake cylinder (14) and accommodated in said component.

7. Master brake cylinder assembly (10) according to claim 6,
**characterized in that** the insert element (24) is fixed in the respective component of fluid reservoir (12) and master brake cylinder (14) by means of a friction lock.

8. Master brake cylinder assembly (10) according to claim 6 or 7,
**characterized in that** the insert element (24) is fixed in the respective component of fluid reservoir (12) and master brake cylinder (14) by means of a detent connection.

9. Master brake cylinder assembly (10) according to one of claims 6 to 8,
**characterized in that** the insert element (24) is arranged at least in sections inside the connecting piece (16).

10. Master brake cylinder assembly (10) according to claim 9,
**characterized in that** the insert element (24) has at least one fastening portion (26), the cross-sectional dimensions of which at least in sections exceed the internal cross-sectional dimensions of the connecting piece.

11. Master brake cylinder assembly (10) according to claim 10,
**characterized in that** the fastening portion (26) is designed with a projection that extends around an outer lateral surface of the insert element (24).

12. Master brake cylinder assembly (10) according to one of claims 6 to 10,
**characterized in that** the insert element (24) has a stop portion, which is in abutment with the respective component of fluid reservoir (12) and master brake cylinder (14) and delimits a push-in depth of the insert element (24) in the respective component of fluid reservoir (12) and master brake cylinder (14).

13. Insert element (24) for a master brake cylinder assembly (10) according to one of claims 6 to 12.

14. Fluid reservoir (12) for a master brake cylinder assembly (10) according to one of the preceding claims.

## Revendications

1. Ensemble maître-cylindre (10) d'un système de freinage de véhicule automobile, comprenant un réservoir de fluide (12) et un maître-cylindre (14), le réservoir de fluide (12) et le maître-cylindre (14) étant reliés fluidiquement l'un à l'autre par au moins un canal de fluide,
**caractérisé en ce qu'**au moins un élément filtre (22) est disposé à l'intérieur de l'ensemble maître-cylindre (10) de manière à être traversé par un volume de liquide de frein échangé en cours de service entre le maître-cylindre (14) et le réservoir de fluide (12), l'élément filtre (22) étant conçu pour recueillir les particules d'impureté présentes dans le liquide de frein,
l'élément filtre (22) étant disposé dans ou sur un composant du réservoir de fluide (12) et du maître-cylindre (14), et
le composant respectif du réservoir de fluide (12) et du maître-cylindre (14) présentant un embout de raccordement (16) au moyen duquel il est couplé à l'autre composant du réservoir de fluide (12) et du maître-cylindre (14), l'élément filtre (22) étant disposé dans ou sur une face extérieure (28) de l'embout de raccordement (16).

2. Ensemble maître-cylindre (10) selon la revendication 1,
**caractérisé en ce que** l'élément filtre (22) est réalisé pour l'essentiel de manière plane.

3. Ensemble maître-cylindre (10) selon la revendication 1 ou 2,
**caractérisé en ce que** l'embout de raccordement (16) est réalisé sous la forme d'une saillie dépassant du composant respectif du réservoir de fluide (12) et du maître-cylindre (14).

4. Ensemble maître-cylindre (10) selon l'une des revendications précédentes, **caractérisé en ce que** l'embout de raccordement (16) est réalisé avec une section circulaire.

5. Ensemble maître-cylindre (10) selon l'une des revendications précédentes, **caractérisé en ce que** l'élément filtre (22) est réalisé d'un seul tenant avec le composant respectif du réservoir de fluide (12) et du maître-cylindre (14).

6. Ensemble maître-cylindre (10) selon l'une des revendications précédentes, **caractérisé en ce que** l'élément filtre (22) est disposé dans un élément d'insertion (24) qui est formé séparément du composant respectif du réservoir de fluide (12) et du maître-cylindre (14) et logé dans ce composant.

7. Ensemble maître-cylindre (10) selon la revendication 6,
**caractérisé en ce que** l'élément d'insertion (24) est fixé par friction dans le composant respectif du réservoir de fluide (12) et du maître-cylindre (14).

8. Ensemble maître-cylindre (10) selon la revendication 6 ou 7,
**caractérisé en ce que** l'élément d'insertion (24) est fixé par encliquetage dans le composant respectif du réservoir de fluide (12) et du maître-cylindre (14).

9. Ensemble maître-cylindre (10) selon l'une des revendications 6 à 8,
**caractérisé en ce que** l'élément d'insertion (24) est disposé au moins partiellement à l'intérieur de l'embout de raccordement (16).

10. Ensemble maître-cylindre (10) selon la revendication 9,
**caractérisé en ce que** l'élément d'insertion (24) présente au moins un segment de fixation (26) dont les dimensions en section transversale excèdent au moins par endroits les dimensions intérieures de la section transversale de l'embout de raccordement.

11. Ensemble maître-cylindre (10) selon la revendication 10,
**caractérisé en ce que** le segment de fixation (26) est réalisé sous la forme d'une saillie qui entoure la surface d'enveloppe extérieure de l'élément d'insertion (24).

12. Ensemble maître-cylindre (10) selon l'une des revendications 6 à 10,
**caractérisé en ce que** l'élément d'insertion (24) présente un segment de butée qui est en contact avec le composant respectif du réservoir de fluide (12) et du maître-cylindre (14) et délimite une profondeur d'insertion de l'élément d'insertion (24) dans le composant respectif du réservoir de fluide (12) et du maître-cylindre (14).

13. Elément d'insertion (24) destiné à un ensemble maître-cylindre (10) selon l'une des revendications 6 à 12.

14. Réservoir de fluide (12) destiné à un ensemble maître-cylindre (10) selon l'une des revendications précédentes.
